## Europäisches Patentamt

## European Patent Office

## Office européen des brevets

(11) Veröffentlichungsnummer: **0 185 064**
**B1**

(12) # EUROPÄISCHE PATENTSCHRIFT

(45) Veröffentlichungstag der Patentschrift:
04.01.89

(51) Int. Cl.⁴: **F 16 D 66/02**

(21) Anmeldenummer: 85902976.1

(22) Anmeldetag: 24.05.85

(86) Internationale Anmeldenummer:
PCT/EP 85/00253

(87) Internationale Veröffentlichungsnummer:
WO 85/05662 (19.12.85 Gazette 85/27)

(54) SIGNALGEBER ZUR ÜBERWACHUNG EINES BREMSBELAGS.

(30) Priorität: 05.06.84 DE 8417127 U
12.02.85 DE 8503812 U

(43) Veröffentlichungstag der Anmeldung:
25.06.86 Patentblatt 86/26

(45) Bekanntmachung des Hinweises auf die Patenterteilung:
04.01.89 Patentblatt 89/1

(84) Benannte Vertragsstaaten:
DE FR GB IT

(56) Entgegenhaltungen:
DE-A-2 010 817
DE-A-3 319 968
GB-A-1 276 193
US-A-3 712 091
US-A-3 716 113

(73) Patentinhaber: **LUCAS INDUSTRIES public limited company, Great King Street, Birmingham, B19 2XF West Midlands (GB)**

(72) Erfinder: **RATH, Heinrich, Bernhard, Sebastian-Kneipp- Strasse 73a, D-5414 Vallendar (DE)**
Erfinder: **SCHEMMEL, Winfried, Basselscheider Strasse 31, D-5401 Emmelshausen (DE)**

(74) Vertreter: **Wuesthoff, Franz, Dr.- Ing., Patentanwälte Wuesthoff -v. Pechmann- Behrens- Goetz Schweigerstrasse 2, D-8000 München 90 (DE)**

**Beschreibung**

Die Erfindung betrifft einen Signalgeber zur Überwachung eines Bremsbelags, insbes. in einer Scheibenbremse für Kraftfahrzeuge, mit einem Gehäuse, das in Einbaulage einem Bremsrotor gegenüberliegt und einen wärmeempfindlichen Schalter sowie elektrische Kontakte und Leitungen enthält, deren Schaltzustände bei bestimmter Abnutzung des Bremsbelags veränderbar sind.

Bei einem bekannten Signalgeber dieser Gattung (DE-A-2 144 466) ist der Signalgeber in einen Bremsschuh eingebaut, der zu diesem Zweck in einem Bremsbelag eine zum Bremsrotor hin offene Aussparung größeren Durchmessers und eine sich daran gleichachsig anschließende Aussparung kleineren Durchmessers aufweist; die Aussparung kleineren Durchmessers setzt sich in einer Belagträgerplatte fort. Das Gehäuse des Signalgebers ist im wesentlichen zylindrisch, erstreckt sich durch die beiden Aussparungen hindurch und hat einen dem Bremsrotor zugewandten Flansch, der in der Aussparung größeren Durchmessers liegt. Die beiden Enden des Gehäuses weisen je einen Verschluß aus keramischer Isoliermasse auf. In den vorderen, dem Bremsrotor zugewandten Verschluß ist eine Drahtschleife eingebettet, die ungefähr in der Ebene des Flansches liegt und von der ein Paar Drähte ausgehen, die durch den hinteren Verschluß nach außen geführt sind und dort Kontakte für Steckverbindungen bilden. An der Innenwand des Gehäuses ist innerhalb des vorderen Verschlusses eine Bimetallfeder befestigt, deren beweglicher Teil im Zwischenraum zwischen den beiden Verschlüssen angeordnet ist und ein freies Ende mit einem Kontakt aufweist. Diesem Kontakt ist ein Kontakt an einem der beiden Drähte derart zugeordnet, daß die Kontakte sich bei normaler Temperatur in einem Abstand gegenüberstehen. Bei zunehmender Temperatur verbiegt sich die Bimetallfeder, bis die Kontakte einander schließlich berühren und einen Stromkreis schließen, wodurch eine Überhitzung des Bremsbelags angezeigt wird. Wenn der Bremsbelag zu einem erheblichen Teil, jedoch noch nicht vollständig abgenutzt ist, trägt der Bremsrotor allmählich eine vordere Schicht des vorderen Verschlusses ab, bis die Drahtschleife erreicht wird, so daß über den Bremsrotor ein Stromkreis geschlossen und dadurch ein während des Bremsens auftretendes Signal für fortgeschrittenen Belagverschleiß abgegeben wird. Wenn bei weiter fortgeschrittenem Belagverschleiß der Bremsrotor die Drahtschleife vollständig zerstört hat, wird ein Ruhestromkreis unterbrochen, was zur Abgabe eines Dauersignals genutzt werden kann.

Dieser bekannte Signalgeber spricht auf eine Überhitzung des Bremsrotors nicht unmittelbar an, sondern erst dann, wenn die Überhitzung durch den - im allgemeinen schlecht wärmeleitenden - Bremsbelag hindurch auch die zugehörige Belagträgerplatte erreicht hat. Bei Überhitzung des Bremsrotors verhält der Signalgeber sich also träge. Außerdem ist er für eine Wiederverwendung nach dem Auswechseln des Bremsbelags in der Regel nicht geeignet, da der Signalgeber im Laufe einer normalen Abnutzung des Bremsbelags weitgehend zerstört wird.

Es ist ferner ein Verschleißanzeiger zur Überwachung der Bremsbelagstärke einer Scheibenbremse bekannt (DE-A-2 010 817), bei dem ein Kontrollkopf mit zwei Kontrollstiften radial außerhalb der Bremsscheibe zwischen den Belagträgerplatten zweier Bremsbacken derart angeordnet ist, daß bei fortgeschrittenem Belagverschleiß die beiden Kontaktstifte von je einer der Belagträgerplatten parallel zur Achse der Bremsscheibe in den Kontrollkopf hineingedrückt werden und dadurch ein Signal auslösen. Dieser Verschleißanzeiger ist zwar wiederverwendbar, da er von der Bremsscheibe nicht verschlissen wird; er ist aber nicht imstande, auch die Temperatur der Bremsscheibe zu überwachen.

Der Erfindung liegt deshalb die Aufgabe zugrunde, einen Signalgeber zur Überwachung eines Bremsbelags derart weiterzubilden, daß er auf Überhitzung des Bremsrotors hinreichend rasch anspricht und auch dann wiederverwendbar ist, wenn der Bremsbelag ganz oder jedenfalls weitgehend verbraucht worden ist.

Die Aufgabe ist erfindungsgemäß dadurch gelöst, daß bei einem Signalgeber der eingangs beschriebenen Gattung ein Stopfen in dem Gehäuse aus einer Ruhestellung parallel zur Richtung der Abnutzung des Bremsbelags verschiebbar geführt, einem nicht rotierenden Bremsenteil in einem bei fortschreitender Abnutzung des Bremsbelags abnehmenden Abstand gegenüberliegend angeordnet, durch dieses Bremsenteil weiter in das Gehäuse eindrückbar ist und in einer Endstellung mindestens einen der Kontakte in einer von seiner Ruhestellung abweichenden Schaltstellung hält, und der wärmeempfindliche Schalter in einem dem Bremsrotor zugewandten Bereich des Signalgebers angeordnet ist.

Bei einer ersten Ausführungsform wird der erfindungsgemäße Signalgeber, insoweit übereinstimmend mit dem aus der DE-A-2 144 466 bekannten Signalgeber, derart angeordnet, daß eine Stirnseite seines Gehäuses dem Bremsrotor, insbes. einer Bremsscheibe, gegenüberliegt. In diesem Fall ist die Erfindung vorzugsweise dadurch weitergebildet, daß das Gehäuse an einem ortsfesten Bremsträger befestigt ist, mit seiner vom Bremsrotor abgewandten Stirnseite, über die der Stopfen hinausragt, einem Fortsatz einer Belagträgerplatte gegenüberliegt und der Stopfen von diesem Fortsatz in das Gehäuse eindrückbar ist.

Bei einer zweiten Ausführungsform ist das Gehäuse des erfindungsgemäßen Signalgebers, insoweit übereinstimmend mit dem aus der DE-A-2 144 466 bekannten Signalgeber, an einer den Bremsbelag tragenden Belagträgerplatte befestigt. In diesem Fall ist dem Stopfen ein ortsfester Anschlag zugeordnet, von dem er in das Gehäuse eindrückbar ist.

Es ist zweckmäßig, daß sämtliche an Leitungen angeschlossenen Kontakte an einem gemeinsamen Kontaktträger abgestützt und mit diesem gemeinsam in das Gehäuse eingesetzt sind. Dies hat den Vorteil, daß am Stopfen weder eine Leitung angeordnet ist, noch ein Kontakt, von dem eine Leitung ausgeht; der Stopfen läßt sich somit besonders billig herstellen und einfach montieren sowie nötigenfalls auswechseln.

Die zuletzt beschriebene Ausführungsform ermöglicht eine Weiterbildung der Erfindung, gemäß der das Gehäuse zwei gleichachsige Aussparungen aufweist, in die der Kontaktträger und der Stopfen von entgegengesetzten Stirnseiten her eingesetzt sind.

Dabei ist es ferner zweckmäßig, daß die beiden Aussparungen durch eine Zwischenwand voneinander getrennt sind, an der sich eine Rückstellfeder für den Stopfen abstützt, und durch die sich ein am Stopfen ausgebildeter Stößel hindurcherstreckt.

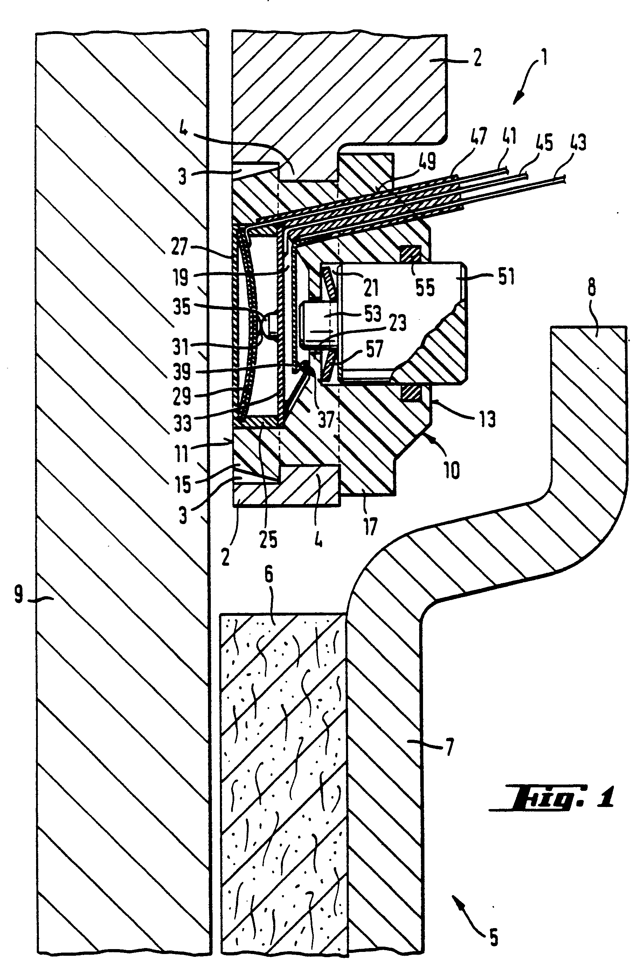

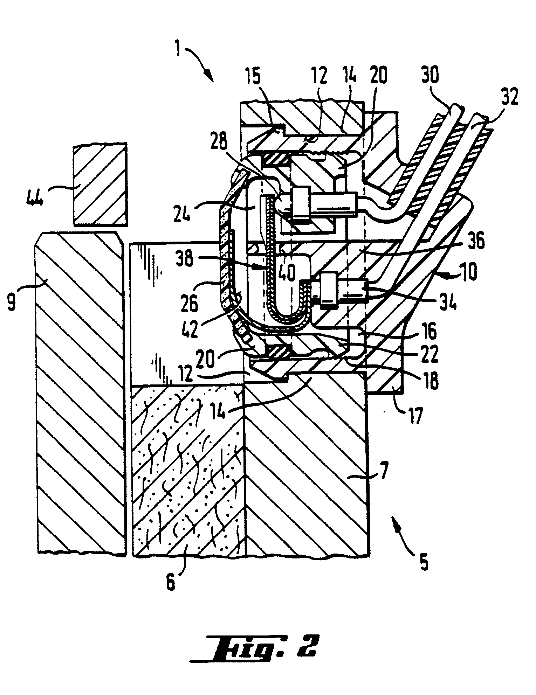

Ausführungsbeispiele der Erfindung werden im folgenden anhand schematischer Zeichnungen mit weiteren Einzelheiten beschrieben. Fig. 1 und 2 zeigen je einen erfindungsgemäßen Signalgeber und die ihn umgebenden Teile je einer Kraftfahrzeug-Scheibenbremse in einem Axialschnitt.

Gemäß Fig. 1 ist ein Signalgeber 1 an einem ortsfesten Bremsträger 2 befestigt, der eine den Signalgeber aufnehmende, kreisförmige Aussparung 3 mit einer ringförmigen Rippe 4 aufweist. Der Signalgeber 1 ist nahe dem Rand einer Bremsbacke 5 angeordnet, der wie üblich einen Bremsbelag 6 und eine Belagträgerplatte 7 aufweist. An der Belagträgerplatte 7 ist ein gekröpfter Fortsatz 8 ausgebildet, dessen Stellung in bezug auf einen Bremsrotor 9, dargestellt ist eine Bremsscheibe, vom Signalgeber 1 überwacht wird, wodurch Rückschlüsse auf den Abnutzungszustand des Bremsbelags 6 ermöglicht werden.

Der Signalgeber 1 hat gemäß Fig. 1 ein im wesentlichen rotationssymmetrisches Gehäuse 10 aus elastischem, jedoch hitzebeständigem Kunststoff mit einer vorderen Stirnfläche 11, die dem Bremsrotor 9 in geringem, unveränderlichem Abstand gegenüberliegt, und eine rückwärtige Stirnfläche 13, die dem Fortsatz 8 in einem bei zunehmendem Verschleiß des Bremsbelags 6 abnehmenden Abstand gegenüberliegt.

Das Gehäuse 10 ist von hinten her, in Fig. 1 also von rechts nach links, in die Aussparung 3 eingepreßt worden; dabei ist ein an der Außenseite des Gehäuses 10 nahe dessen vorderer Stirnfläche 11 ausgebildeter Ringabschnitt 15 von hakenförmigem Profil hinter der ringförmigen Rippe 4 des Bremsträgers 2 eingerastet. Nahe der rückwärtigen Stirnfläche 13 des Gehäuses 10 ist ein Flansch 17 ausgebildet, der an der Rückseite der Rippe 4 anliegt.

Im Gehäuse 10 ist von vorne her eine im wesentlichen zylindrische Aussparung 19 großen Durchmessers und gleichachsig von hinten her eine zylindrische Aussparung 21 kleineren Durchmessers ausgebildet; zwischen diesen beiden Aussparungen läßt eine Zwischenwand 23 nur eine enge mittlere Verbindung frei.

In die vordere Aussparung 19 ist ein topfförmiger Kontaktträger 25 aus Isolierstoff eingepreßt, der von einem ebenfalls elektrisch isolierenden Deckel 27 nach vorne hin abgeschlossen ist. Innerhalb des Kontaktträgers 25 ist eine membranartige Bimetallplatte 29 angeordnet, die mittig einen bistabilen Kontakt 31 trägt. Hinter der Bimetallplatte 29 ist im Kontaktträger 25 eine Zwischenplatte 33 befestigt, die mittig einen ersten ortsfesten Kontakt 35 trägt. Die beiden Kontakte 31 und 35 liegen bei normaler Temperatur aneinander an; wenn jedoch die Temperatur der Bimetallplatte 29, die beim Bremsen vom Bremsrotor 9 aus aufgeheizt wird, einen bestimmten Betrag überschreitet, springt der bistabile Kontakt 31 nach vorn und entfernt sich dadurch vom ortsfesten Kontakt 35.

Hinter der Zwischenplatte 33 ist ein zweiter ortsfester Kontakt 37 am Kontaktträger 25 abgestützt und normalerweise in Anlage an einem Kontakt 39, der am Gehäuse 10 federnd abgestützt ist. Der bistabile Kontakt 31 ist an eine Leitung 41 angeschlossen und der federnde Kontakt 39 an eine Leitung 43, wogegen die beiden ortsfesten Kontakte 35 und 37 an eine Leitung 45 angeschlossen sind. Die drei Leitungen 41, 43 und 45 sind von einem gemeinsamen isolierenden Mantel 47 umschlossen und mit diesem durch einen schrägen Kanal 49 des Gehäuses 10 nach außen geführt. Der Kanal 49 bildet bei dem in Fig. 1 dargestellten, bevorzugten Ausführungsbeispiel die einzige Abweichung des Gehäuses 10 von einer vollkommenen Rotationssymmetrie.

In der hinteren Aussparung 21 ist gemäß Fig. 1 ein Stopfen 51 aus isolierendem Kunststoff teilweise aufgenommen. Der Stopfen 51 hat einen zentralen Fortsatz 53, der sich durch die Zwischenwand 23 hindurch in die vordere Aussparung 19 erstreckt, dort aber bei neuem oder unvollständig abgenutztem Bremsbelag 6 keine Wirkung ausübt. Der Stopfen 51 ist von einer in das Gehäuse 10 eingebetteten ringförmigen Dichtung 55 umschlossen, die jeglicher Axialverschiebung des Stopfens einen spürbaren Widerstand entgegensetzt. Rings um den Fortsatz 53 ist eine Rückstellfeder 57 angeordnet, die bestrebt ist, den Stopfen 51 von der Zwischenwand 23 wegzudrücken.

Wenn die Abnutzung des Bremsbelags 6 soweit fortgeschritten ist, daß der Fortsatz 8 den Stopfen 51 merklich weiter als in Fig. 1 dargestellt in das Gehäuse 10 eindrückt, dann stößt der Fortsatz 53 gegen die federnde Abstützung des beweglichen Kontakts 39 und hebt diesen vom zweiten ortsfesten Kontakt 37 ab, wodurch ein Signalstromkreis geöffnet wird. Die Rückstellfeder 57 ist nicht imstande, den Stopfen 51 zusammen mit der Bremsbacke 5, deren Fortsatz 8 am Stopfen anliegt, zu verschieben; deshalb behält der Stopfen 51 bei entsprechend fortgeschrittener Abnutzung des Bremsbelags 6 seine Stellung bei, in der er die Kontakte 37 und 39 voneinander getrennt und somit den zugehörigen Stromkreis offenhält. Erst wenn die Bremsbacke 5 ausgebaut wird, um durch eine neue ersetzt zu werden, drängt die Rückstellfeder 57 den Stopfen 51 in seine in der Zeichnung abgebildete Ausgangsstellung zurück.

Wenn der Bremsrotor 9 bei einer längeren Bremsung stark erhitzt wird, strahlt er soviel Wärme ab, daß die Bimetallplatte 29 auf eine vorbestimmte Temperatur erwärmt wird, bei der sie nach vorne umschnappt, wodurch der bistabile Kontakt 31 vom ersten ortsfesten Kontakt 35 getrennt wird. Dadurch wird ein Ruhestromkreis unterbrochen, in dem diese Kontakte 31 und 35 sowie die Leitungen 41 und 45 liegen.

Das Ausführungsbeispiel gemäß Fig. 2 unterscheidet sich von dem in Fig. 1 dargestellten vor allem dadurch, daß der Signalgeber 1 nicht am Bremsträger, sondern an der Bremsbacke 5 befestigt ist. Die Belagträgerplatte 7 der Bremsbacke 5 hat eine Aussparung 12 mit einer ringförmigen Rippe 14, hinter der ein wie in Fig. 1 hakenförmig ausgebildeter Ringabschnitt 15 des Gehäuses 10 eingerastet ist.

Das Gehäuse 10 hat gemäß Fig. 2 eine im wesentlichen zylindrische Aussparung 16, die nach vorne, zum Bremsrotor 9 hin, offen ist. Rings um diese Aussparung 16 sind im Gehäuse 10 Rippen 18 von sägezahnförmigem Profil ausgebildet. In der Aussparung steckt ein Stopfen 20, der an seinem hinteren, vom Bremsrotor 9 abgewandten Ende eine Ringrippe 22 von hakenförmigem Profil aufweist. Die Ringrippe 22 ist hinter einer der Rippen 18 eingerastet, wodurch der Stopfen 20 gegen Herausfallen gesichert ist.

Der Stopfen 20 hat einen Hohlraum 24, der nach vorne durch eine Platte 26 aus Kunststoff von gutem Wärmeleitvermögen abgeschlossen ist. In den Hohlraum 24 ragt ein Kontaktstift 28 hinein, der am Stopfen 20 befestigt und an eine isolierte Leitung 30 angeschlossen ist. Die Leitung 30 ist zusammen mit einer zweiten isolierten Leitung 32 durch das Gehäuse 10 nach außen geführt; beide Leitungen 30 und 32 lassen sich an einen Ruhestromkreis anschließen, der ein nicht dargestelltes Relais oder dergleichen enthält.

Die Leitung 32 endet an einem Tragstift 34, der in ein Sockelteil 36 des Gehäuses 10 eingebettet ist und eine Bimetallfeder 38 trägt. Das freie Ende der Bimetallfeder 38 liegt bei normaler bis mäßig erhöhter Temperatur am Kontaktstift 28 an, so daß der Ruhestromkreis geschlossen ist. Wenn jedoch der Bremsrotor 9 soviel Wärme abstrahlt, daß die Bimetallfeder 38 über eine vorbestimmte Temperatur erhitzt wird, dann öffnet die Bimetallfeder den Ruhestromkreis. Die Folge davon ist, daß das genannte Relais o.dgl. abfällt und eine optische und/oder akustische Warneinrichtung in Betrieb setzt.

Die Bimetallfeder 38 erstreckt sich durch eine am Sockel 36 ausgebildete Öse 40 hindurch, die ihren Bewegungspielraum begrenzt. Zusammen mit der Bimetallfeder 38 ist am Sockel 36 eine Kupferplatte 42 befestigt, die großflächig an der Platte 26 anliegt und den Wärmeübergang von dieser zur Bimetallfeder begünstigt.

Bei fortschreitender Abnutzung des Bremsbelags 6 nähert sich die Belagträgerplatte 7 - und mit ihr der in Fig. 2 dargestellte Signalgeber 1 - dem Bremsrotor 9. Radial neben dem Bremsrotor 9 ist ein ortsfester Anschlag 44 angeordnet, gegen den der Stopfen 20 mit seiner Platte 26 stößt, ehe diese den Bremsrotor 9 erreicht. Wenn bei weiter fortschreitender Abnutzung des Bremsbelags 6 die Bremse betätigt wird, so wird der Stopfen 20 vom Anschlag 44 zurückgehalten und dadurch weiter in das Gehäuse 10 hineingedrückt. Die Bimetallfeder 38 wird hingegen von der Öse 40 weiter in Betätigungsrichtung der Bremsbacke 5 mitgenommen und dadurch vom Kontaktstift 28 wegbewegt. Der Ruhestromkreis wird also bei weit fortgeschrittener Belagabnutzung auch dann unterbrochen, wenn der Bremsrotor 9 kühl bleibt.

## Patentansprüche

1. Signalgeber zur Überwachung eines Bremsbelags, insbes. in einer Scheibenbremse für Kraftfahrzeuge, mit einem Gehäuse (10), das in Einbaulage einem Bremsrotor (9) gegenüberliegt und einen wärmeempfindlichen Schalter (31, 35; 28, 38) sowie elektrische Kontakte (37, 39; 28, 38) und Leitungen (43, 45; 30, 32) enthält, deren Schaltzustände bei bestimmter Abnutzung des Bremsbelags (6) veränderbar sind,

dadurch gekennzeichnet, daß ein Stopfen (51; 20) in dem Gehäuse (10) aus einer Ruhestellung parallel zur Richtung der Abnutzung des Bremsbelags (6) verschiebbar geführt, einem nicht rotierenden Bremsenteil (8; 44) in einem bei fortschreitender Abnutzung des Bremsbelags (6) abnehmenden Abstand gegenüberliegend angeordnet, durch dieses Bremsenteil (8; 44) weiter in das Gehäuse (10) eindrückbar ist und in einer Endstellung mindestens einen der Kontakte (37; 28) in einer von seiner Ruhestellung abweichenden Schaltstellung hält, und daß der wärmeempfindliche Schalter (31, 35; 28, 38) in einem dem Bremsrotor (9) zugewandten Bereich des Signalgebers (1) angeordnet ist.

2. Signalgeber nach Anspruch 1, dadurch gekennzeichnet, daß das Gehäuse (10) an einem ortsfesten Bremsträger (2) befestigt ist, mit seiner vom Bremsrotor (9) abgewandten Stirnseite (13), über die der Stopfen (51) hinausragt, einem Fortsatz (8) einer Belagträgerplatte (7) gegenüberliegt und der Stopfen (51) von diesem Fortsatz (8) in das Gehäuse (10) eindrückbar ist.

3. Signalgeber nach Anspruch 1, dessen Gehäuse (10) an einer den Bremsbelag (6) tragenden Belagträgerplatte (7) befestigt ist, dadurch gekennzeichnet, daß dem Stopfen (20) ein ortsfester Anschlag (44) zugeordnet ist, von dem er in das Gehäuse (10) eindrückbar ist.

4. Signalgeber nach Anspruch 1, dadurch gekennzeichnet, daß sämtliche an Leitungen (41, 43, 45) angeschlossenen Kontakte (31, 35, 37, 39) an einem gemeinsamen Kontaktträger (25) abgestützt und mit diesem gemeinsam in das Gehäuse (10) eingesetzt sind.

5. Signalgeber nach Anspruch 4, dadurch gekennzeichnet, daß das Gehäuse (10) zwei gleichachsige Aussparungen (19, 21) aufweist, in die der Kontaktträger (25) und der Stopfen (51) von entgegengesetzten Stirnseiten (11,13) her eingesetzt sind.

6. Signalgeber nach Anspruch 5, dadurch gekennzeichnet, daß die beiden Aussparungen (19, 21) durch eine Zwischenwand (23) voneinander getrennt sind, an der sich eine Rückstellfeder (57) für den Stopfen (51) abstützt, und durch die sich ein am Stopfen (51) ausgebildeter Stößel (53) hindurcherstreckt.

## Claims

1. A signal transmitter for monitoring a brake lining, especially in a disc brake for motor vehicles, comprising a casing (10) which, when installed, is positioned opposite a brake rotor (9) and contains a heat sensitive switch (31, 35; 28, 38) and electrical contacts (37, 39; 28, 38) and leads (43, 45; 30, 32) the switching states of which are adapted to be changed upon certain wear of the brake lining (6), characterized in that a plug (51; 20) is guided in the casing (10) for displacement from an inoperative po sition in parallel with the direction of wear of the brake lining (6), is positioned opposite a non-rotating brake member (8; 44) at decreasing spacing as the wear of the brake lining (6) progresses, and is adapted to be pressed farther into the casing (10) by this brake member (8; 44) and, in a terminal position, holds at least one of the contacts (37; 28) in a switching position which differs from the inoperative position, and in that the heat sensitive switch (31, 35; 28, 38) is arranged in a front area of the signal transmitter (1) facing the brake rotor (9).

2. The signal transmitter as claimed in claim 1, characterized in that the casing (10) is fixed to a stationary brake carrier (2), has its end face (13) which is remote from the brake rotor (9) and beyond which the plug (51) projects disposed opposite an extension (8) of a brake lining backplate (7), and the plug (51) is adapted to be pressed into the casing (10) by this extension (8).

3. The signal transmitter as claimed in claim 1, the casing (10) of which is fixed to a backplate (7) carrying the brake lining (6), characterized in that a stationary stop (44) is coordinated with the plug (20) by means of which the plug is adapted to be pressed into the casing (10).

4. The signal transmitter as claimed in claim 1, characterized in that all contacts (31, 35, 37, 39) connected to leads (41, 43, 45) are supported on a common contact carrier (25) and inserted into the casing (10) together with the same.

5. The signal transmitter as claimed in claim 4, characterized in that the casing (10) has two coaxial recesses (19, 21) into which the contact carrier (25) and the plug (51) are inserted from opposite end faces (11, 13).

6. The signal transmitter as claimed in claim 5, characterized in that the two recesses (19, 21) are separated by a partition (23) which supports a return spring (57) for the plug (51) and through which extends a tappet (53) formed at the plug (51).

## Revendications

1. Emetteur de signaux pour surveiller une garniture de frein, en particulier dans un frein à disque pour véhicules motorisés, comportant un boîtier (10) qui, en position de montage, est situé en face d'un rotor (9) de frein et contient un commutateur (31, 35; 28, 38) thermosensible ainsi que des contacts électriques (37, 39; 28, 38) et des conducteurs (43, 45; 30, 32) dont les états de commutation peuvent se modifier lors d'une usure déterminée de la garniture de frein (6), caractérisé en ce qu'un bouchon (51; 20) peut coulisser dans le boîtier (10), à partir d'une position de repos, parallèlement à la direction de l'usure de la garniture de frein (6), est disposé en face d'une partie non tournante (8; 44) du frein, à une distance qui diminue au fur et à mesure de l'usure de la garniture de frein (10), peut être repoussé plus loin dans le boîtier (10) par cette partie (8; 44) du frein et, dans une position finale, maintient au moins l'un des contacts (37; 28) dans une position de commutation qui s'écarte de sa position de repos; et en ce que le commutateur thermosensible (31, 35; 28, 38) est disposé dans une zone de l'émetteur de signaux (1) tournée vers le rotor de frein (9).

2. Emetteur de signaux selon la revendication 1, caractérisé en ce que le boîtier (10) est fixé à un support fixe (2) de frein, est situé, par sa face frontale (13) qui est tournée du côté opposé au rotor (9) de frein et au-delà de laquelle dépasse le bouchon (51), en face d'un prolongement (8) d'un plateau (7) porte-garniture; et en ce que le bouchon (51) peut être repoussé dans le boîtier (10) par ce prolongement (8).

3. Emetteur de signaux selon la revendication 1, dont le boitier (10) est fixé à un plateau (7) porte-garniture qui porte la garniture (6) de frein, caractérisé en ce qu'au bouchon (20) correspond une butée fixe (44) par laquelle il peut être repoussé dans le boîtier (10).

4. Emetteur de signaux selon la revendication 1, caractérisé en ce que tous les contacts (31, 35, 37, 39) reliés à des conducteurs (41, 43, 45) s'appuient sur un porte-contact commun (25); et en ce qu on les insère dans le boîtier (10) en commun avec ce porte contact.

5. Emetteur de signaux selon la revendication 4, caractérisé en ce que le boîtier (10) présente deux évidements coaxiaux (19, 21) dans lesquels on insère le portecontact (25) et le bouchon (51) depuis les faces frontales (11, 13) opposées.

6. Emetteur de signaux selon la revendication 5, caractérisé en ce que les deux évidements (19, 21) sont séparés l'un de l'autre par une cloison (23) contre laquelle s'appuie un ressort de rappel (57) pour le bouchon (51) et à travers laquelle s'étend un poussoir (53) prévu sur le bouchon (51).

**Fig. 1**

*Fig. 2*